# EUROPÄISCHE PATENTSCHRIFT

(11) **EP 0 535 260 B1**
(45) Veröffentlichungstag und Bekanntmachung des Hinweises auf die Patenterteilung: **07.12.1994**
(21) Anmeldenummer: 91116611.4
(22) Anmeldetag: 28.09.1991
(51) Int. Cl.: F23G 7/12, F23G 5/12, F23G 5/027, C22B 1/00

(54) **Vorrichtung zum Trennen von mit Verunreinigungen versehenen Metallen von den Verunreinigungen**
Apparatus for separating impurities from impurities containing metals
Dispositif de séparation d'impuretés à partir des métaux contenant ces impuretés

(43) Veröffentlichungstag der Anmeldung: 07.04.1993
(73) Patentinhaber: Wille, Heinz, D-90425 Nürnberg (DE)
(72) Erfinder: Wille, Heinz, D-90425 Nürnberg (DE)
(74) Vertreter: LOUIS, PÖHLAU, LOHRENTZ & SEGETH

(56) Entgegenhaltungen:
- EP-A- 0 067 139
- BE-A- 626 282
- DE-A- 3 612 892
- DE-A- 3 741 110
- US-A- 1 603 760
- US-A- 3 346 417
- US-A- 3 794 459

## Beschreibung

Die Erfindung betrifft eine Vorrichtung zum Trennen von mit Verunreinigungen versehenen Metallen von den Verunreinigungen durch Erhitzen mittels heißer Abgase, die durch einen Brenner erzeugt werden, mit einem den Brenner aufweisenden Brennraum, der mittels einer ersten Leitung mit je einer von zwei vom Brennraum räumlich getrennten, für die verunreinigten Metalle vorgesehenen Aufnahmekammern verbunden ist, die zur Umgebung hin mittels einer Tür luftdicht abschließbar und jeweils über eine erste Rückleitung mit dem Brenner verbunden sind, wobei jede Aufnahmekammer von einer Erwärmungskammer umgeben ist, die mit einer von der ersten Leitung abzweigenden zweiten Leitung verbunden ist, mit je einer der entsprechenden ersten und zweiten Leitung zugeordneten Steuereinrichtung, mit je einer zweiten Rückleitung zwischen der entsprechenden Erwärmungskammer und der zugehörigen Steuereinrichtung, und mit je einer Bypaßleitung zwischen der entsprechenden Steuereinrichtung und dem gemeinsamen Brennraum.

Eine derartige Vorrichtung ist aus der DE-A- 36 12 892 des Anmelders bekannt.

Der Erfindung liegt die Aufgabe zugrunde, eine Vorrichtung der eingangs genannten Art derartig weiter zu verbessern, daß die Metallreinigung noch weiter optimiert ist.

Diese Aufgabe wird erfindungsgemäß dadurch gelöst, daß jede Erwärmungskammer in zwei Teilräume unterteilt ist, von denen der erste Teilraum zum Durchleiten des Brenner-Abgases mit einem Abgas-Einlaß zur fluidischen Verbindung mit der zugehörigen zweiten Leitung und mit einem Abgas-Auslaß zur fluidischen Verbindung mit der zugehörigen zweiten Rückleitung, und von denen der zweite Teilraum zu Kühlzwecken mit einem Kühlmedium-Einlaß und mit einem Kühlmedium-Auslaß für ein Kühlmedium ausgebildet ist, wobei die beiden Teilräume der entsprechenden Erwärmungskammer die zugehörige Aufnahmekammer schraubenlinienförmig umgeben und die beiden Teilräume in Längsrichtung der Erwärmungskammer bzw. der Aufnahmekammer hintereinander angeordnet sind.

Bei dem Kühlmedium handelt es sich vorzugsweise um Kühlluft, die durch den besagten zweiten Teilraum durchleitbar ist. Durch die Ausbildung jeder Erwärmungskammer mit zwei voneinander getrennten Teilräumen ist es nicht nur möglich, die Abkühlung der entsprechenden Aufnahmekammer nach Abschluß eines Metallreinigungszyklus innerhalb vergleichsweise kurzer Zeit durchzuführen, so daß die Totzeit der erfindungsgemäßen Vorrichtung gering ist, sondern es ist in vorteilhafter Weise auch möglich, durch geeignete Steuerung des Kühlmediumsflusses durch den zweiten Teilraum der entsprechenden Erwärmungskammer die Abgastemperatur im ersten Teilraum der Erwärmungskammer wunschgemäß einzustellen. Hierdurch ist die Metallreinigung optimierbar und der Energieaufwand zum Betrieb der Vorrichtung minimierbar.

Als besonders zweckmäßig hat es sich erwiesen, wenn hierbei der erste Teilraum Kammern aufweist, die miteinander schraubenlinienförmig strömungsmitteltechnisch in Serie verbunden sind, wobei die beiden voneinander entfernten Endabschnitte des ersten Teilraumes mit dem Abgas-Einlaß bzw. mit dem Abgas-Auslaß versehen sind. Dem selben Zweck ist es dienlich, wenn der zweite Teilraum Kühlkammern aufweist, die mit ihrem einen Endabschnitt jeweils mit einer ersten Sammelleitung und die mit ihrem zweiten Endabschnitt jeweils mit einer zweiten Sammelleitung fluidisch derart verbunden ist, daß die Kühlkammern zwischen beiden Sammelleitungen strömungsmitteltechnisch parallel geschaltet sind. Die beiden Sammelleitungen für das Kühlmedium verlaufen hierbei vorzugsweise über der Erwärmungskammer nebeneinander parallel.

Eine zuverlässige Minimierung der Abkühlzeiten und folglich eine Minimierung der Totzeit der Vorrichtung wird hierbei erzielt, wenn der Abgas-Einlaß mit der zweiten Rohrleitung und der Abgas-Auslaß mit der zweiten Rückleitung und der Kühlmedium-Einlaß und der Kühlmedium-Auslaß derart vorgesehen sind, daß sich in dem ersten Teilraum eine schraubenlinienförmige Abgasströmung ergibt, die in axialer und in Umfangsrichtung der entsprechenden Erwärmungskammer gegen die Strömung des Kühlmediums in dem zweiten Teilraum gerichtet ist. Durch eine solche Ausbildung ergibt sich also eine schraubenlinienförmige Gegenströmung des Kühlmediums in Bezug auf das im Brennraum erzeugte, den ersten Teilraum durchströmende Abgas, die eine schnelle Einstellung einer gewünschten Abgastemperatur zum optimalen Betrieb der Vorrichtung und die eine rasche Abkühlung der Vorrichtung nach Beendigung eines Metallreinigungsvorgangs ermöglicht.

Die der Erfindung zugrundeliegende Aufgabe kann erfindungsgemäß auch dadurch gelöst werden, daß jede Aufnahmekammer mit Abgas-Verteilerorganen ausgebildet ist, die mit der ersten Leitung fluidisch verbindbar bzw. verbunden sind, wobei die Abgas-Verteilerorgane an der Innenseite der Tür und an der der Tür zugewandten Innenseite der Rückwand derentsprechenden Aufnahmekammer derart vorgesehen sind, daß sich in der entsprechenden Aufnahmekammer gegeneinander gerichtete Abgas-Teilströme ergeben. Durch diese gegeneinander gerichteten Abgas-Teilströme ergibt sich in der entsprechenden Aufnahmekammer eine optimale Verwirbelung des besagten Abgas-Teilstromes, durch welche dem in der Aufnahmekammer durch pyrolytische Zersetzung erzeugten inerten Gas seine mögliche Aggressivität gezielt genommen werden kann. Außerdem ist durch die gegeneinander gerichteten Abgas-Teilströme eine zeitsparende, schnelle Aufheizung der entsprechenden Aufnahmekammer möglich, was zur Optimierung des Betriebes der Vorrichtung vorteilhaft ist.

Dem selben Zweck ist es dienlich, wenn jede Aufnahmekammer zur Aufnahme mehrerer über- und hintereinander angeordneter Wannen für verunreinigtes Metall vorgesehen ist, wobei jede Wanne mit einem Kanal zum gezielten Durchleiten von Abgasen ausgebildet ist. Der besagte Kanal ist an der entsprechenden Wanne vorzugsweise an dessen Boden in Längsrichtung verlaufend mittig vorgesehen. Durch den Kanal jeder Wanne kann ein entsprechender Abgas-Teilstrom durchgeleitet werden, um eine schnelle Aufheizung der entsprechenden Wanne zu erzielen.

Durch die oben beschriebene Ausbildung der Vorrichtung mit den gegeneinander gerichteten Abgas-Teilströmen in der entsprechenden Aufnahmekammer ergibt sich in vorteilhafter Weise auch ein gleichmäßiger konstanter Druck in der entsprechenden Aufnahmekammer, was für die Optimierung des Betriebes der Vorrichtung vorteilhaft ist.

Die der Erfindung zugrundeliegende Aufgabe kann auch dadurch gelöst werden, daß in den Brennraum in einem Abstand vom Brenner Prallwände hineinragen, und daß auf der der ersten Leitung zugewandten Seite der Prallwände in deren Nachbarschaft die Bypassleitungen der beiden Aufnahmekammern in den Brennraum einmünden. Mit Hilfe der Prallwände ist es möglich, den Brenner bei Temperaturen von größenordnungsmäßig 1200 bis 1500°C zu betreiben, ohne daß diese hohen Abgastemperaturen zu einer Beschädigung der Vorrichtung führen würden. Mit Hilfe dieser hohen Temperaturen ist es in vorteilhafter Weise möglich, die in der entsprechenden Aufnahmekammer durch Pyrolyse erzeugten Gase so im Brennraum zu verbrennen, daß gesundheitsgefährdende Verbindungen wie Dioxine, Furane usw. optimal verbrannt werden. Mit Hilfe der Prallwände werden die größenordnungsmäßig 1200 bis 1500°C heißen Gasen umgelenkt und verwirbelt. Dadurch, daß die Bypassleitungen in der Nachbarschaft der Prallwände, d.h. auf der Vorderseite der Prallwände in den Brennraum einmünden, ist es mit Hilfe des durch die Bypassleitung durchströmenden Abgas-Teilstromes möglich, das heiße Verbrennungsgas auf Temperaturen von größenordnungsmäßig 800 bis 900°C abzukühlen, so daß die bereits erwähnten Beschädigungen des Brennraums bzw. der zwischen den Aufnahmekammern vorgesehenen Brenner-Vorrichtung zuverlässig ausgeschlossen werden können. Außerdem ist es möglich, eventuell im Abgas-Teilstrom der entsprechenden Bypassleitung transportierte brennbare Partikel im Brennraum vor den Prallwänden nachzuverbrennen. Auch hierdurch ist es möglich, die Temperatur in der jeweils in Betrieb befindlichen Aufnahmekammer wunschgemäß konstant zu halten, d.h. eine Überhitzung der Vorrichtung bzw. der gesamten Anlage zuverlässig zu vermeiden.

Als vorteilhaft hat es sich hierbei erwiesen, wenn die beiden Bypassleitungen mit einem gemeinsamen Sammelraum fluidisch verbunden sind, der mit voneinander beabstandeten Abgas-Düsenöffnungen in den Brennraum einmündet. Die eingangs genannte Aufgabe kann bei einer Vorrichtung der eingangs genannten Art auch dadurch gelöst werden, daß die beiden ersten Rückleitungen in den gemeinsamen Brenner voneinander räumlich und strömungsmitteltechnisch derart getrennt einmünden, daß eine ungewollte Abgasströmung von der einen zur anderen ersten Rückleitung vermieden wird. Das bedeutet, daß ein unerwünschter Verlust des durch Pyrolyse in der entsprechenden Aufnahmekammer erzeugten Abgases verhindert wird und das besagte Abgas verlustfrei zum Betrieb des Brenners zur Verfügung steht. Hierbei ist es vorteilhaft, wenn jede der beiden ersten Rückleitungen mit einem zugehörigen Sammelraum fluidisch verbunden ist, wobei die beiden Sammelräume in einem Gehäuseteil des Brennraumes voneinander räumlich getrennt vorgesehen sind und mit Abgasdüsen in den Brennraum einmünden, der zur ersten Leitung hin düsenartig erweitert ausgebildet ist. Das Gehäuseteil mit den besagten Sammelräumen kann im Bedarfsfall problemlos ausgetauscht werden, wenn dies erforderlich sein sollte. Die Abgasdüsen der beiden voneinander getrennten Sammelräume münden hierbei derartig in den Brennraum ein, daß eine Gasströmung von einem zum anderen Sammelraum während des Betriebes des Brenners insbesondere durch die Brennerströmung zuverlässig vermieden wird.

Eine Ausbildung der erfindungsgemäßen Vorrichtung bzw. wesentlicher Einzelheiten derselben sind in der Zeichnung dargestellt und werden nachfolgend beschrieben. Es zeigen:
- Fig. 1: ein schematisch dargestelltes Schema der Vorrichtung,
- Fig. 2: eine teilweise aufgeschnittene Seitenansicht einer Aufnahmekammer mit einer Erwärmungskammer,
- Fig. 3: eine Ansicht der Aufnahme- und Erwärmungskammer in Blickrichtung des Pfeiles III in Figur 2 von oben,
- Fig. 4: einen Längsschnitt durch eine schematische Darstellung der Aufnahme- und Erwärmungskammer entlang der Schnittlinie IV-IV in Figur 3,
- Fig. 5: eine Ansicht auf die Tür der Aufnahmekammer in Richtung der Schnittlinien V-V in Figur 4,
- Fig. 6: eine Ansicht entlang der Schnittlinie VI-VI in Figur 4 zur Rückseite der schematisch gezeichneten Aufnahmekammer,
- Fig. 7: eine der Figur 5 ähnliche Darstellung der Aufnahme- bzw. Erwärmungskammer zur Verdeutlichung der Abzweigung, durch welche die Abgas-Verteilerorgane an der Tür der Aufnahmekammer mit Abgas versorgt werden,
- Fig. 8: eine der Figur 7 ähnliche Darstellung zur Verdeutlichung der Versorgung der Abgas-Verteilerorgane an der Rückwand der Aufnahmekammer,
- Fig. 9: eine Ansicht einer zum Beladen mit verunreinigten Metallen vorgesehenen Wanne von oben,
- Fig. 10: eine Ansicht der Wanne gem. Figur 9 in Blickrichtung des Pfeiles X,
- Fig. 11: eine Ansicht des wannenförmigen Wagens gem. Figur 9 in Blickrichtung des Pfeiles XI,
- Fig. 12: eine schematische Darstellung der Brennvorrichtung bzw. des Brennraumes mit abschnittweise gezeichneten ersten Rückleitungen und mit abschnittweise gezeichneten Bypassleitungen, und
- Fig. 13: eine abschnittweise längsgeschnittene Darstellung der Brennvorrichtung bzw. des Brennraumes mit dem mit Sammelräumen ausgebildeten Gehäuseteil und dem abschnittweise gezeichneten Brenner.

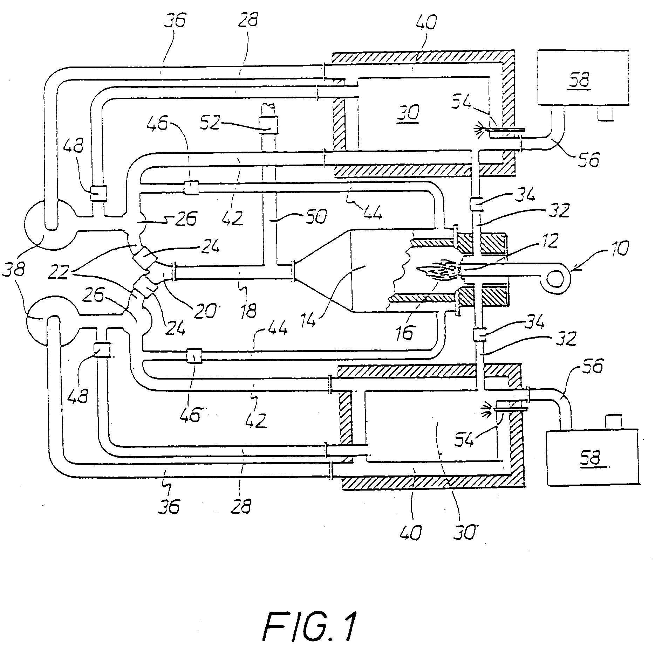

Figur 1 zeigt schematisch in einer Schaltungs- bzw. Blockdarstellung eine Vorrichtung zum Trennen von mit Verunreinigungen versehenen Metall von den Verunreinigungen, mit einem Brenner 10, dessen Düse 12 in einen Brennraum 14 hineingerichtet ist. Im Betrieb des Brenners 10 befindet sich an bzw. vor der Düse 12 eine Flamme 16.

An den Brennraum 14 ist eine erste Leitung 18 angeschlossen, die eine Abzweigung 20 aufweist. Von der Abzweigung 20 gehen zwei Abzweigleitungen 22 aus, in denen Absperrorgane 24 angeordnet sind. Jede Abzweigleitung 22 mündet in eine Steuereinrichtung 26, die beispielsweise als Mehrweg-Drosselklappenventil ausgebildet ist. Von jeder Steuereinrichtung 26 geht eine Leitung 28 aus, die als Teilrohrleitung der ersten Leitung in eine entsprechende luftdichte Aufnahmekammer 30 für die verunreinigten bzw. zu reinigenden Metalle einmündet. Jede Aufnahmekammer 30 ist mit dem Brenner 10 mittels einer ersten Rückleitung 32 verbunden, in der ein Absperrorgan 34 vorgesehen ist.

Von jeder Steuereinrichtung 26 zweigt neben der ersten Leitung 28 eine zweite Leitung 36 ab, in welcher ein Heißgas-Ventilator 38 angeordnet ist. Die zweite Leitung 36 mündet mit ihrem von der Steuereinrichtung 26 entfernten Ende in eine die entsprechende Aufnahmekammer 30 umgebende Erwärmungskammer 40 ein. Zwischen der entsprechenden Steuereinrichtung 26 und der zugehörigen Erwärmungskammer 40 ist eine zweite Rückleitung 42 vorhanden. Eine Bypassleitung 44 ist zwischen der entsprechenden Steuereinrichtung 26 bzw. der zugehörigen zweiten Rückleitung 42 und dem Brennraum 14 angeordnet und mit einem Absperrorgan 46 versehen.

In jeder ersten Leitung 28 ist zwischen Steuereinrichtung 26 und Aufnahmekammer 30 eine Absperreinrichtung 48 vorgesehen.

Die erste Leitung 18 ist im Anschluß an den Brennraum 14 mit einem Kamin 50 versehen, der eine Verschlußeinrichtung 52 aufweist. Der Kamin 50 kann mit einem nicht gezeichneten Abgaswäscher verbunden sein.

In jeder Aufnahmekammer 30 ist eine Berieselungseinrichtung 54 vorgesehen. Außerdem ist an jede Aufnahmekammer 30 mittels einer Rohrleitung 56 eine Naßfiltereinrichtung 58 angeschlossen.

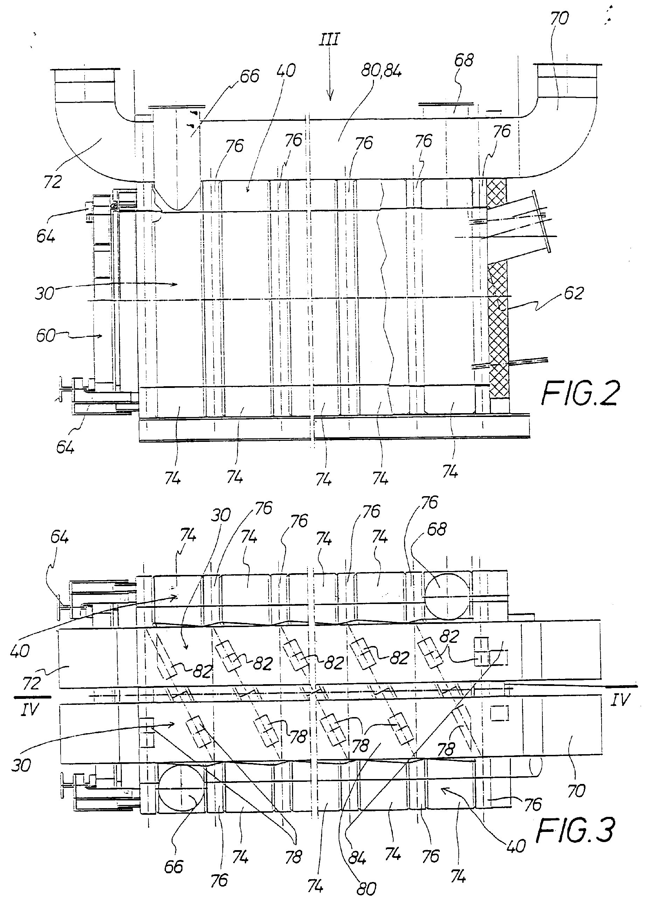

Die Figuren 2 und 3 zeigen eine der beiden Aufnahmekammern 30 mit der diese umgebenden Erwärmungskammer 40 in einer Seitenansicht und in einer Draufsicht. Vorderseitig ist die Erwärmungskammer 30 durch eine Tür 60 verschließbar und rückseitig ist die Aufnahmekammer 30 mittels einer Rückwand 62 verschlossen. Zum abdichtenden Verschließen der Aufnahmekammer 30 mit der Tür 60 sind an dieser Verschlußorgane 64 vorgesehen.

Die die Aufnahmekammer 30 umgebende Erwärmungskammer 40 ist in zwei Teilräume (74, 76) unterteilt, von denen der erste Teilraum (74) zum Durchleiten des Brenner-Abgases mit einem Abgas-Einlaß 66 und mit einem Abgas-Auslaß 68 ausgebildet ist. Der Abgas-Einlaß 66 ist zum Anschluß an die entsprechende zweite Leitung 36 (sh. Figur 1) und der Abgas-Auslaß 68 ist zum Anschluß an die zweite Rückleitung 42 (sh. Figur 1) vorgesehen. Der vom ersten Teilraum (74) zum Durchleiten des Brenner-Abgases räumlich getrennte zweite Teilraum (76) der Erwärmungskammer 40 ist mit einem Kühlmedium-Einlaß 70 und mit einem Kühlmedium-Auslaß 72 versehen. Der erste Teilraum (74) für das Brenner-Abgas ist mit Kammern ausgebildet, die zwischen dem Abgas-Einlaß 66 und dem Abgas-Auslaß 68 miteinander schraubenlinienförmig verbunden sind. Der zweite Teilraum (76) für das Kühlmedium ist mit Kühlkammern ausgebildet, die zwischen den Kammern für das Brenner-Abgas angeordnet und ebenfalls schraubenlinienförmig vorgesehen sind. Während die Kammern für das Brenner-Abgas miteinander strömungsmitteltechnisch in Reihe zusammengeschaltet sind, ist jede Kühlkammer des zweiten Teilraumes mit ihrem einen Endabschnitt 78 mit einer ersten Sammelleitung 80 fluidisch verbunden, die mit dem Kühlmedium-Einlaß 70 versehen ist. Der zweite Endabschnitt 82 jeder Kühlkammer ist mit einer zweiten Sammelleitung 84 verbunden, die mit dem Kühlmedium-Auslaß 72 ausgebildet ist. Abgas-Einlaß 66 und Abgas-Auslaß 68 bzw. Kühlmedium-Auslaß 70 und Kühlmedium-Auslaß 72 sind derartig vorgesehen, daß sich bei strömungsmitteltechnisch zwischen den beiden Sammelleitungen 80 und 84 parallel geschalteten Kühlkammern des zweiten Teilraumes 76 und den in Reihe geschalteten Kammern des ersten Teilraumes 74 zwischen der Strömung des Brenner-Abgases und der Kühlmedium-Strömung in der Erwärmungskammer 40 eine Gegenströmung ergibt. Durch diese Gegenströmung ist ein schneller Wärmeaustausch zwischen den gesamten Strömungen möglich.

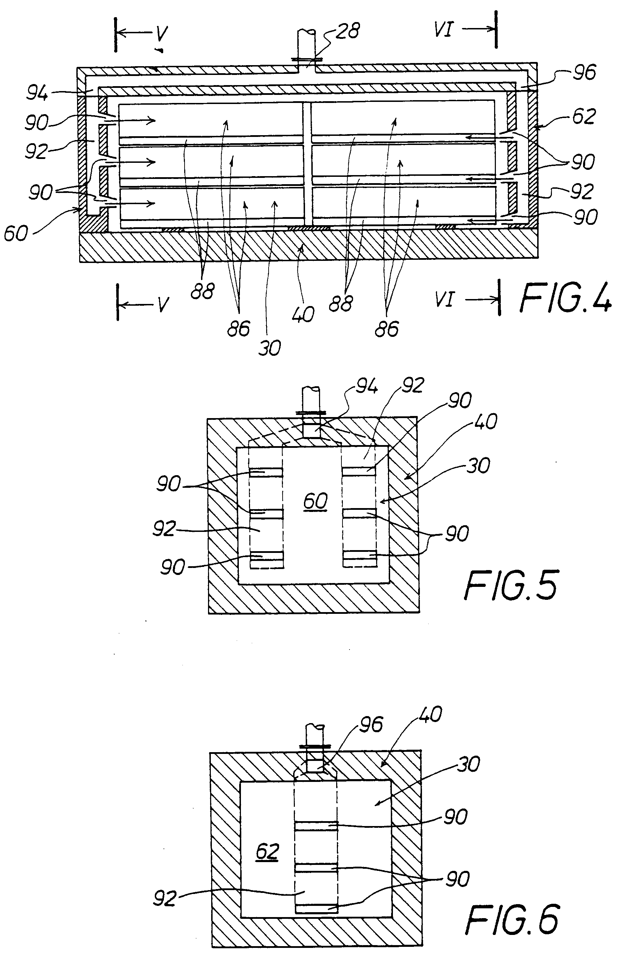

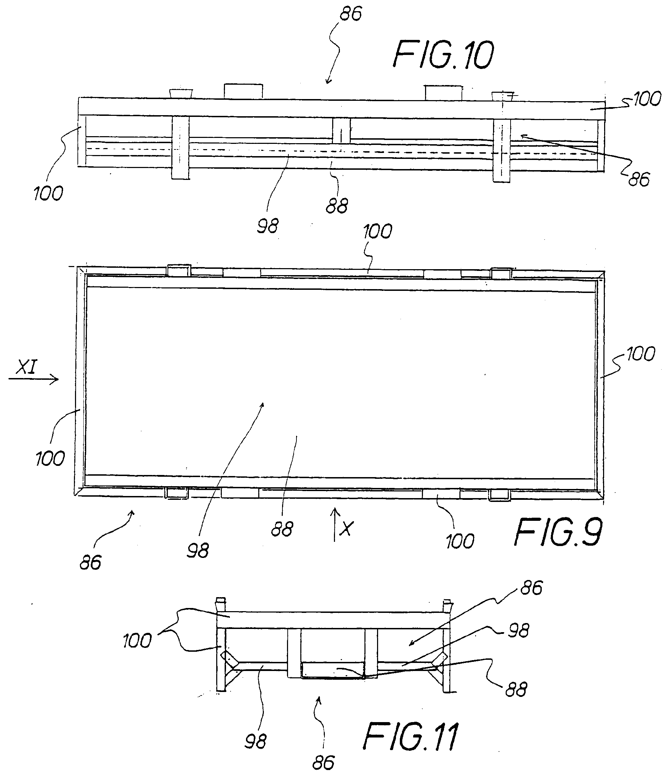

Figur 4 zeigt schematisch in einem Längsschnitt eine Aufnahmekammer 30 mit Tür 60 und Rückwand 62, wobei in der von einer Erwärmungskammer umgebenen Aufnahmekammer 30 Wannen 86 über- und hintereinander angeordnet sind. Die Ausbildung der Wannen 86 ist aus den Figuren 9 bis 11 ersichtlich und wird weiter unten beschrieben. Jede Wannen 86 ist mit einem zentralen Längskanal 88 ausgebildet.

Die Tür 60 ist an ihrer Innenseite mit Abgas-Verteilerorganen 90 ausgebildet, wobei aus Figur 5 ersichtlich ist, daß an der Innenseite der Tür 60 zwei Reihen von übereinander angeordneten und voneinander beabstandeten Abgas-Verteilorganen 90 vorgesehen sind. Jede der beiden Reihen von Abgas-Verteilerorganen 90 ist mit einem Raum 92 fluidisch verbunden. Die beiden Räume 92 in der Tür 60 sind mittels einer im Bereich der Erwärmungskammer 40 vorgesehenen Abzweig-Einrichtung 94 mit der zugehörigen ersten Leitung 28 (sh. Figur 1) verbindbar. Entsprechend ist die Rückwand 62 der Aufnahmekammer 30 mit Verteilerorganen 90 versehen, die mit einem Sammelraum 92 fluidisch verbunden sind. Die zuletzt genannten Abgas-Verteilerorgane 90 sind an der Rückwand 62 mittig derart vorgesehen, daß sie gegen die Längskanäle 88 der Wannen 86 gerichtet sind. Im Inneren der Aufnahmekammer 30 ergibt sich folglich eine Gegenströmung des Brenner-Abgases durch die gegeneinander gerichteten Abgas-Verteilerorgane 90 und folglich eine gute Verwirbelung des Abgases in der Aufnahmekammer 30.

Der in der Rückwand 62 vorhandene Raum 92 ist über eine Leitung 96 mit der ersten Leitung 28 verbindbar.

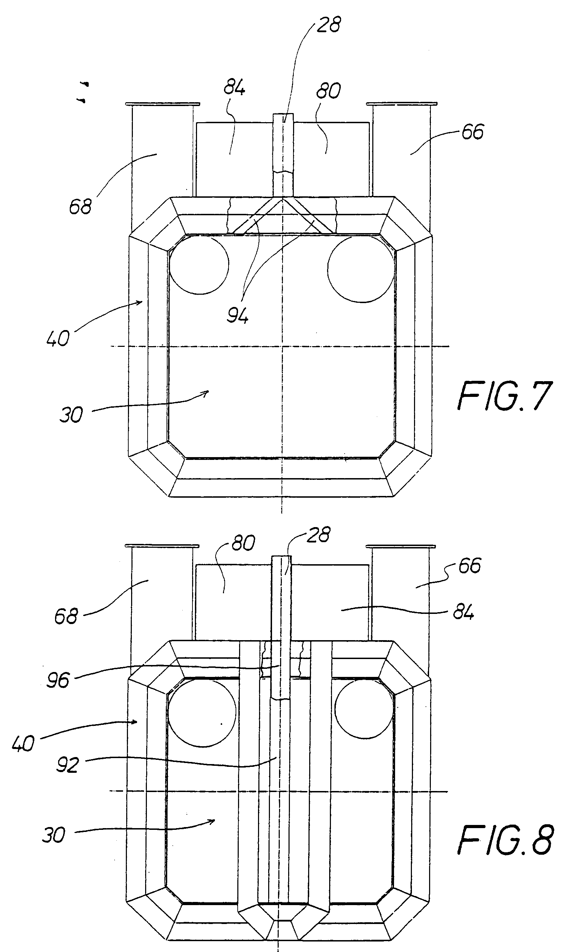

Die Figur 7 verdeutlicht die Abzweigeinrichtung 94 mit einem Abschnitt der ersten Leitung 28 zwischen den beiden nebeneinander parallel verlaufenden Sammelleitungen 80 und 84. Mit der Bezugsziffer 66 ist auch in dieser Figur der Abgas-Einlaß in die die Erwärmungskammer 30 mit Teilräumen umgebende Erwärmungskammer 40 und mit der Bezugsziffer 68 der Abgas-Auslaß bezeichnet. Entsprechend verdeutlicht die Figur 8 die Leitung 96 bzw. den mit ihr verbundenen Raum 92 sowie den Teilabschnitt der ersten Leitung 28 zwischen den Sammelleitungen 80 und 84 sowie den Abgas-Einlaß 66 in die die Aufnahmekammer 30 umgebende Erwärmungskammer 40 und den Abgas-Auslaß 68 aus der Erwärmungskammer 40.

Die Figuren 9, 10 und 11 zeigen eine Wannen 86 mit einem Boden 98, umlaufenden Seitenwandteilen 100 und einem am Boden 98 vorgesehenen mittigen Längskanal 88, der zum Durchleiten eines bestimmten Anteiles des Brenner-Abgases vorgesehen ist. Die Seitenwandteile 100 jeder Wanne 86 sind derartig ausgebildet, daß der durch die Abgasverteilerorgane 90 an der Innenseite der Tür 60 durchströmende Abgasanteil in das Innere der entsprechenden Wanne 86 gelangen kann, um das darin befindliche verunreinigte Metall wunschgemäß zu erhitzen und die Verunreinigungen pyrolytisch zu zersetzen.

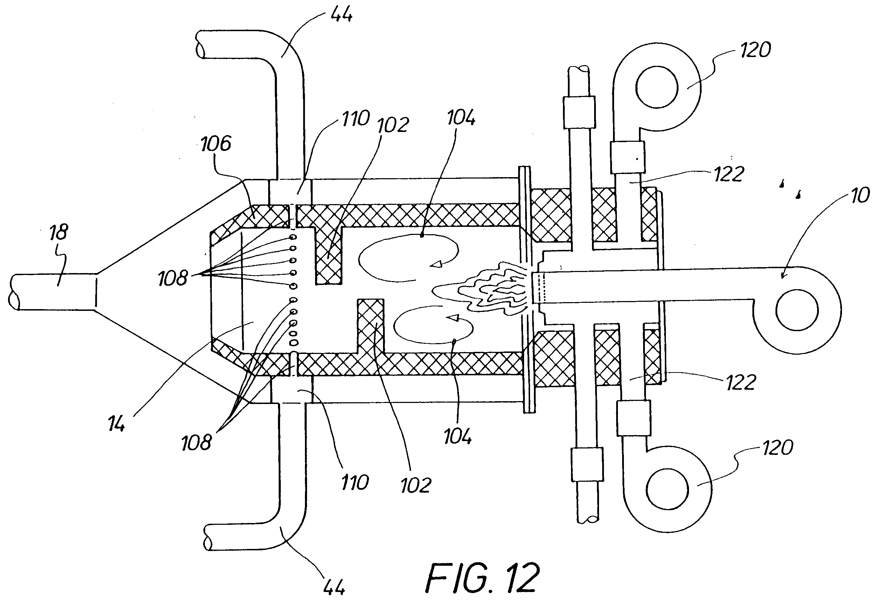

Figur 12 zeigt schematisch den Brenner 10, der in den Brennraum 14 hineinsteht. In den Brennraum 14 ragen in einem Abstand vom Brenner 10 Prallwände 102 hinein, durch welche die heißen Brennerabgase umgelenkt werden, was durch die Pfeile 104 angedeutet ist. Auf der der ersten Rohrleitung 18 zugewandten Seite sind vor den Prallwänden 102 in der Auskleidung 106 Austrittsöffnungen 108 ausgebildet, die mit einem Ringraum 110 fluidisch verbunden sind, der an der Außenseite der Auskleidung 106 umläuft und in welchen die beiden Bypassleitungen 44 (sh. auch Figur 1) einmünden. Durch diese Ausbildung ist nicht nur eine Kühlung der heißen Brenner-Abgase sondern auch eine Nachverbrennung brennbarer Partikel im Abgas realisierbar.

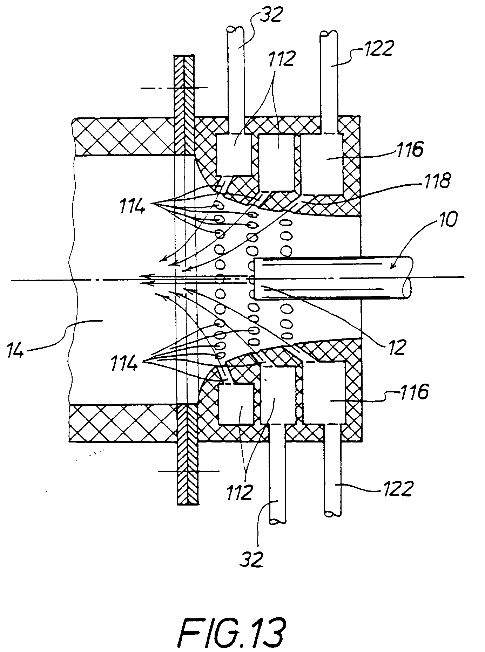

Figur 13 veranschaulicht schematisch eine Ausbildung der erfindungsgemäßen Vorrichtung, bei welcher die beiden ersten Rückleitungen 32 in den Brenner 10 nicht wie in Figur 1 schematisch angedeutet sondern voneinander räumlich und strömungsmitteltechnisch derart getrennt einmünden, daß eine ungewollte Abgasströmung von der einen Rückleitung 32 zur anderen Rückleitung 32 auch bei undichtem Absperrorgan 34 zuverlässig vermieden wird. Zu diesem Zweck ist jede erste Rückleitung 32 mit einem zugehörigen Sammelraum 112 verbunden, die ringförmig ausgebildet und voneinander räumlich getrennt sind. Jeder der beiden Sammelräume 112 mündet mit Abgasdüsen 114 in den Brennraum 14 ein. Die Abgasdüsen 114 sind derart orientiert, daß sie vor die Düse 12 des Brenners 10 gerichtet sind, so daß im Betrieb des Brenners 10 die durch die Abgasdüsen 114 austretenden Gase mit der vor der Düse 12 befindlichen Brennflamme bzw. deren Strömung mitgerissen werden. Ein ringförmiger Luftraum 116 mündet mit Düsen 118 in den Brennerraum 14 hinein. Der Luftsammelraum 116 ist mit Ventilatoren 120 über Rohrleitungen 122 verbunden, wie aus Figur 12 zu ersehen ist.

Wenn oben von zu reinigenden Metallen die Rede ist, so versteht es sich, daß die offenbarte Vorrichtung selbstverständlich auch zur Reinigung anderer Materialien wie Mineralstoffen, Keramik, Zellstoff o.gl. geeignet ist.

## Patentansprüche

1. Vorrichtung zum Trennen von mit Verunreinigungen versehenen Metallen von den Verunreinigungen durch Erhitzen mittels heißer Abgase, die durch einen Brenner (10) erzeugt werden, mit einem den Brenner (10) aufweisenden Brennraum (14), der mittels einer ersten Leitung (18, 20, 28) mit je einer von zwei vom Brennraum (14) räumlich getrennten, für die verunreinigten Metalle vorgesehenen Aufnahmekammern (30) verbunden ist, die zur Umgebung hin mittels einer Tür (60) luftdicht abschließbar und jeweils über eine erste Rückleitung (32) mit dem Brenner (10) verbunden sind, wobei jede Aufnahmekammer (30) von einer Erwärmungskammer (40) umgeben ist, die mit einer von der ersten Leitung (18) abzweigenden zweiten Leitung (28) verbunden ist, mit je einer der entsprechenden ersten und zweiten Leitung zugeordneten Steuereinrichtung (26), mit je einer zweiten Rückleitung (42) zwischen der entsprechenden Erwärmungskammer (40) und der zugehörigen Steuereinrichtung (26), und mit je einer Bypassleitung (44) zwischen der entsprechenden Steuereinrichtung (26) und dem gemeinsamen Brennraum (14),
**dadurch gekennzeichnet,**
daß jede Erwärmungskammer (40) in zwei Teilräume (74, 76) unterteilt ist, von denen der erste Teilraum (74) zum Durchleiten des Brenner-Abgases mit einem Abgas-Einlaß (66) zur fluidischen Verbindung mit der zugehörigen zweiten Leitung (36) und mit einem Abgas-Auslaß (68) zur fluidischen Verbindung mit der zugehörigen zweiten Rückleitung (42) und von denen der zweite Teilraum zu Kühlzwecken mit einem Kühlmedium-Einlaß (70) und mit einem Kühlmedium-Auslaß (72) für ein Kühlmedium ausgebildet ist, wobei die beiden Teilräume (74, 76) der entsprechenden Erwärmungskammer (40) die zugehörige Aufnahmekammer (30) schraubenlinienförmig umgeben und die beiden Teilräume (74, 76) in Längsrichtung der Erwärmungskammer (40) bzw. der Aufnahmekammer (30) hintereinander angeordnet sind.

2. Vorrichtung nach Anspruch 1,
**dadurch gekennzeichnet,**
daß der erste Teilraum (74) Kammern aufweist, die miteinander schraubenlinienförmig strömungsmitteltechnisch in Serie verbunden sind, wobei die beiden voneinander entfernten Endabschnitte des ersten Teilraumes (74) mit dem Abgas-Einlaß (66) bzw. mit dem Abgas-Auslaß (68) versehen sind.

3. Vorrichtung nach Anspruch 1 oder 2,
**dadurch gekennzeichnet,**
daß der zweite Teilraum (76) Kühlkammern aufweist, die mit ihrem einen Endabschnitt jeweils mit einer ersten Sammelleitung und die mit ihrem zweiten Endabschnitt jeweils mit einer zweiten Sammelleitung (74) fluidisch derart verbunden ist, daß die Kühlkammern zwischen den beiden Sammelleitungen (80, 84) strömungsmitteltechnisch parallel geschaltet sind.

4. Vorrichtung nach einem der Ansprüche 1 bis 3,
**dadurch gekennzeichnet,**
daß der Abgas-Einlaß (66) mit der zweiten Leitung (36) und der Abgas-Auslaß (68) mit der zweiten Rückleitung (42) und der Kühlmedium-Einlaß (70) und der Kühlmedium-Auslaß (72) derart vorgesehen sind, daß sich in dem ersten Teilraum (74) eine schraubenlinienförmige Abgasströmung ergibt, die in axialer und in Umfangsrichtung der Erwärmungskammer (40) gegen die Strömung des Kühlmediums in dem zweiten Teilraum (76) gerichtet ist.

5. Vorrichtung nach dem Oberbegriff des Anspruchs 1,
**dadurch gekennzeichnet,**
daß jede Aufnahmekammer (30) mit Abgas-Verteilerorganen (90) ausgebildet ist, die mit der ersten Leitung (28) fluidisch verbindbar bzw. verbunden sind, wobei die Abgas-Verteilerorgane (90) an der Innenseite der Tür (60) und an der der Tür (60) zugewandten Innenseite der Rückwand (62) der entsprechenden Aufnahmekammer (30) derart vorgesehen sind, daß sich in der entsprechenden Aufnahmekammer (30) gegeneinandergerichtete Abgas-Teilströme ergeben.

6. Vorrichtung nach Anspruch 5,
**dadurch gekennzeichnet,**
daß jede Aufnahmekammer (30) zur Aufnahme mehrerer über- und hintereinander angeordneter Wannen (86) für verunreinigtes Metall vorgesehen ist, wobei jede Wanne (86) mit einem Kanal (88) zum gezielten Durchleiten von Abgas ausgebildet ist.

7. Vorrichtung nach dem Oberbegriff des Anspruchs 1,
**dadurch gekennzeichnet,**
daß in den Brennraum (14) in einem Abstand vom Brenner (10) Prallwände (102) hineinragen, und daß auf der der ersten Leitung (18) zugewandten Vorderseite der Prallwände (102) in deren Nachbarschaft die Bypassleitungen (44) der Aufnahmekammern (30) in den Brennraum (14) einmünden.

8. Vorrichtung nach Anspruch 7,
**dadurch gekennzeichnet,**
daß die beiden Bypassleitungen (44) mit einem gemeinsamen Sammelraum (110) fluidisch verbunden sind, der mit voneinander beabstandeten Abgas-Düsenöffnungen (108) in den Brennraum (14) einmünden.

9. Vorrichtung nach dem Oberbegriff des Anspruchs 1,
**dadurch gekennzeichnet,**
daß die beiden ersten Rückleitungen (32) in den gemeinsamen Brenner (10) voneinander räumlich und strömungsmitteltechnisch derart getrennt einmünden, daß eine ungewollte Abgasströmung von der einen zur anderen ersten Rückleitung (32) vermieden wird.

10. Vorrichtung nach Anspruch 9,
**dadurch gekennzeichnet,**
daß jede erste Rückleitung (32) mit einem zugehörigen Sammelraum (112) fluidisch verbunden ist, wobei die beiden Sammelräume (112) in einem Gehäuseteil des Brennraumes (14) voneinander räumlich getrennt vorgesehen sind und mit Abgasdüsen (114) in den Brennraum (14) einmünden, der zur ersten Leitung (18) hin düsenartig erweitert ausgebildet ist.

## Claims

1. An apparatus for separating metals containing impurities from the impurities, by heating by means of hot combustion gases which are produced by a burner (10), with a combustion chamber (14) having the burner (10), which chamber is connected by means of a first line (18, 20, 28) to one each of two receiving chambers (30) that are spatially separated from the combustion chamber (14) and are provided for the impure metals, which receiving chambers can be closed in an airtight manner to the surroundings by means of a door (60) and which are each connected via a first return line (32) to the burner (10), in which arrangement each receiving chamber (30) is surrounded by a heating chamber (40) which is connected to a second line (28) that branches off from the first line (18), with one control device (26) each, assigned to the corresponding first and second lines, with one second return line (42) each between the corresponding heating chamber (40) and the associated control device (26), and with one bypass line (42) each between the corresponding control device (26) and the common combustion chamber (14),
**characterized in that**
each heating chamber (40) is subdivided into two subspaces (74, 76) whereof the first subspace (74) is designed for the passing of the combustion gas of the burner to a combustion gas intake (62) for the fluidic connection to the associated second line (36), and with a combustion gas outlet (68) for the fluidic connection to the associated second return line (42), and whereof the second subspace is designed for cooling purposes with a cooling medium intake (70), and with a cooling medium outlet (72) for a cooling medium, in which arrangement the two sub-spaces (74, 76) of the corresponding heating chamber (40) surround the associated receiving chamber (30) in a helical configuration, and the two subspaces (74, 76) are arranged one after the other in the longitudinal direction of the heating chamber (40), and of the receiving chamber (30) respectively.

2. An apparatus according to claim 1,
**characterized in that**
the first subspace (74) has chanbers which, in the arrangement for the flow medium, are connected to each other in series in a helical configuration, in which arrangement the two end sections of the first subspace (74) that are remote from each other are provided with the combustion gas intake (66) and with the combustion gas outlet (68) respectively.

3. An apparatus according to claim 1 or 2,
**characterized in that**
the second subspace (76) has cooling chambers which are, at one of their end sections, each fluidically connected to a first collecting line and at their second end section, each to a second collecting line (74), in such a way that the cooling chambers between the two collecting lines (80, 84) are, in the arrangement for the flow medium, disposed in parallel.

4. An apparatus according to one of claims 1 to 3,
**characterized in that**
the combustion gas intake (66) with the second line (36) and the combustion gas outlet (68) with the second return line (42) and the cooling medium intake (70) and the cooling medium outlet (72) are provided in such a way, that in the first subspace (74) there arises a combustion gas flow in a helical configuration which is directed in the axial and peripheral directions of the heating chamber (40) against the flow of the cooling medium in the second subspace (76).

5. An apparatus according to the introductory part of claim 1,
**characterized in that**
each receiving chamber (30) is designed with combustion gas distributing elements (90) which can be, or are, fluidically connected to the first line (28), in which arrangement the combustion gas distributing elements (90) are provided on the inner side of the door (60) and on the inner side facing the door (60), of the rear wall (62) of the corresponding receiving chamber (30), in such a way that in the receiving chamber (30) concerned, there arise part flows of the combustion gas that are directed against each other.

6. An apparatus according to claim 5,
**characterized in that**
each receiving chamber (30) is provided for receiving several vats (86) for impure metal, in which arrangement each vat (86) is provided with a duct (88) for the directed passing of combustion gas.

7. An apparatus according to the introductory part of claim 1,
**characterized in that**
baffles (102) project at a distance from the burner (10) into the combustion chamber (14), and that at the front side of the baffles (102) facing the first line (18), the bypass lines (42) of the receiving chambers (30) lead in the vicinity of the baffles into the combustion chamber (14).

8. An apparatus according to claim 7
**characterized in that**
the two bypass lines (42) are fluidically connected to a common collecting compartment (110) which leads via nozzle openings (108) for the combustion gas into the combustion chamber (14).

9. An apparatus according to the introductory part of claim 1,
**characterized in that**
the first two return lines (32) lead into the common burner (10) being separated in space and in the arrangement for the flow medium, in such a way that an undesired flow of the combustion gas from the one to the other first return line (32) is avoided.

10. An apparatus according to claim 9,
**characterized in that**
each first return line (32) is fluidically connected to an associated collecting compartment (112), in which arrangement the two collecting compartments (112) are provided in a housing part of the combustion chamber (14) being spatially separated from each other, and lead with combustion gas nozzles (114) into the combustion chamber (14) which is designed to flare in the manner of a nozzle towards the first line (18).

## Revendications

1. Dispositif pour la séparation de métaux accompagnés d'impuretés de ces impuretés par échauffement au moyen de gaz d'échappement chauds obtenus par un brûleur (10), comportant une chambre de combustion (14) contenant le brûleur (10), reliée au moyen d'une première conduite (18, 20, 28) avec l'une ou l'autre de deux chambres de réception (30) séparées spatialement de la chambre de combustion (14), prévues pour les métaux pollués, pouvant être isolées de manière étanche à l'air de leur environnement par une porte (60), et reliées chacune respectivement au brûleur (10) par une première conduite de retour (32), chaque chambre de réception (30) étant entourée d'une chambre de réchauffage (40) reliée par une seconde conduite (28) constituant une ramification de la première conduite (18) à l'un ou l'autre de systèmes de commande (26) disposés chacun pour correspondre à l'une des première et seconde conduites correspondantes, chacune des secondes conduites de retour (42) étant située entre la chambre de réchauffage correspondante (40) et le système de commande (26) qui lui est associé, et comprenant une conduite de dérivation (44) située entre le système de commande (26) correspondant et la chambre de combustion commune (14),
caractérisé en ce que
chaque chambre de réchauffage (40) est séparée en deux espaces partiels (74, 76), dont le premier (74) est agencé pour la circulation des gaz d'échappement du brûleur avec une admission de gaz d'échappement (66) créant une communication de fluides avec la seconde conduite correspondante (36), et une sortie de gaz d'échappement (68) créant une communication de fluides avec la seconde conduite correspondante (42), et dont le second (76) est agencé à des fins de refroidissement avec une admission d'agent de refroidissement (70) et une sortie d'agent de refroidissement (72) pour un agent de refroidissement, les deux espaces partiels (74, 76) de la chambre de réchauffement correspondante (40) entourant la chambre de réception correspondante (30) en forme hélicoïdale et les deux espaces partiels (74, 76) étant disposés l'un derrière l'autre dans la direction longitudinale de la chambre de réchauffement (40) ou de la chambre de réception (30).

2. Dispositif selon la revendication 1, caractérisé en ce que le premier espace partiel (74) comprend des chambres reliées entre elles en série pour former un moyen de circulation de forme hélicoïdale, les deux sections terminales éloignées l'une de l'autre du premier espace partiel (74) comportant l'admission de gaz d'échappement (66) et la sortie de gaz d'échappement (68) respectivement.

3. Dispositif selon les revendications 1 ou 2, caractérisé en ce que le second espace partiel (76) comprend des chambres de refroidissement dont une section terminale de chacune est réunie pour la circulation de fluides avec une première conduite collectrice et dont l'autre section terminale de chacune est réunie pour la circulation de fluides avec une seconde conduite collectrice, de manière telle que les chambres de refroidissement sont branchées en parallèle pour former un moyen de circulation entre les deux conduites collectrices (80, 84).

4. Dispositif selon les revendications 1 à 3, caractérisé en ce que l'admission de gaz d'échappement (66), avec la seconde conduite (36), la sortie de gaz d'échappement (68), avec la seconde conduite de retour (42), l'admission d'agent de refroidissement (70) et la sortie d'agent de refroidissement (72) sont agencées de telle manière que la circulation des gaz d'échappement dans le premier espace partiel (74) se produit sous forme d'un courant hélicoïdal, qui, axialement et dans la direction périphérique de la chambre de réchauffement (40), s'oppose au courant d'agent de refroidissement dans le second espace partiel (76).

5. Dispositif selon le préambule de la revendication 1, caractérisé en ce que chaque chambre de réception (30) comporte des organes de répartition des gaz d'échappement (90) qui sont ou peuvent être mis en communication fluidique avec la première conduite (28), l'organe de répartition de gaz d'échappement (90) du côté intérieur de la porte (60) et du côté intérieur de la paroi arrière (63) de la chambre de réception (30) correspondante opposée à la porte (60) sont agencés de manière telle qu'il se crée dans la chambre de réception correspondante (30) des courants de gaz d'échappement dirigés en sens opposés.

6. Dispositif selon la revendication 5, caractérisé en ce que chaque chambre de réception (30) est agencée avec plusieurs cuves (86) pour la réception de métal pollué disposées les une derrière les autres, chaque cuve comportant un canal (88) pour la traversée voulue des gaz d'échappement.

7. Dispositif selon le préambule de la revendication 1, caractérisé en ce que, dans l'espace de combustion (14) des cloisons en chicanes sont prévues à une certaine distance du brûleur (10), et en ce que sur le côté avant, orienté vers la première conduite (18) des cloisons en chicane (102), dans le voisinage des conduites de dérivation (44), s'ouvre la chambre de réception (30) dans l'espace de combustion (14).

8. Dispositif selon la revendication 7, caractérisé en ce que les deux conduites de dérivation (44) sont en communication fluidique avec un espace collecteur commun (110), débouchant dans l'espace de combustion (14) par des buses de gaz d'échappement (108) espacées les unes des autres.

9. Dispositif selon le préambule de la revendication 1, caractérisé en ce que les deux premières conduites de retour (32) débouchent dans le brûleur commun (10) de manière séparée spatialement et en flux de manière telle qu'est évité un courant de gaz d'échappement de l'une vers l'autre première conduite de retour (32).

10. Dispositif selon la revendication 9, caractérisé en ce que chacune des premières conduites de retour (32) est en communication fluidique avec un espace collecteur correspondant (112), les deux espaces collecteurs (112) étant prévus espacés l'un de l'autre dans une portion du carter de l'espace de combustion (14) et débouchant dans l'espace de combustion (14) par des buses de gaz d'échappement (114) qui s'élargissent en forme de tuyères vers la première conduite (18).
